# EUROPÄISCHE PATENTSCHRIFT

(11) **EP 2 708 400 B1**
(45) Veröffentlichungstag und Bekanntmachung des Hinweises auf die Patenterteilung: **28.07.2021**
(21) Anmeldenummer: 13181926.0
(22) Anmeldetag: 28.08.2013
(51) Int. Cl.: B60K 6/48, B60W 10/06, B60W 10/08, B60W 10/113, B60W 20/00, B60W 30/192, F02N 11/00, B60W 30/19

(54) **Verfahren zum Ansteuern eines Hybridantriebsstranges**
Method for controlling a hybrid power train
Procédé destiné à la commande d'une chaîne d'entraînement hybride

(30) Priorität: 12.09.2012 DE 102012018416
(43) Veröffentlichungstag der Anmeldung: 19.03.2014
(73) Patentinhaber: Magna PT B.V. & Co. KG, 74199 Untergruppenbach (DE)
(72) Erfinder: Blessing, Uli Christian, 74078 Heilbronn (DE); Hoffmeister, Thomas, 70825 Korntal-Münchingen (DE); Matusche, Ingo, 74199 Untergruppenbach (DE); Stepper, Thorsten, 74638 Waldenburg (DE); Knöpfle, Philipp, 71636 Ludwigsburg (DE)
(74) Vertreter: Rausch, Gabriele

(56) Entgegenhaltungen:
- EP-A1- 1 714 817
- DE-A1-102008 027 658
- DE-A1-102010 044 618
- None

## Beschreibung

Die vorliegende Erfindung betrifft Verfahren zum Ansteuern eines Hybridantriebsstranges, der einen Antriebsmotor und ein Doppelkupplungsgetriebe aufweist, das zur Einrichtung von zwei Leistungsübertragungspfaden eine erste und eine zweite Reibkupplung und ein erstes und ein zweites Teilgetriebe aufweist, wobei eine elektrische Maschine in Leistungsflussrichtung hinter der zweiten Reibkupplung an dem zweiten Leistungsübertragungspfad angebunden oder anbindbar ist, wobei ein rein elektrischer Fahrbetrieb über das der zweiten Reibkupplung zugeordnete zweite Teilgetriebe erfolgen kann, und wobei bei einem Gangwechsel in dem zweiten Teilgetriebe während eines rein elektrischen Fahrbetriebes ein Füllmoment bereitgestellt wird.

Doppelkupplungsgetriebe der beschriebenen Art sind allgemein bekannt. Durch das Bereitstellen von zwei Leistungsübertragungspfaden ist es möglich, Gangwechsel ohne Zugkrafteinbruch durchzuführen. Dabei wird das von dem Antriebsmotor bereitgestellte Antriebsmoment durch überschneidende Betätigung von einem Leistungsübertragungspfad auf den anderen zugkraftunterbrechungsfrei übergeben. Diese Art der Ansteuerung eines Doppelkupplungsgetriebes ist insbesondere bei Antriebssträngen bekannt, deren Antriebsmotor ein Verbrennungsmotor ist.

Ferner ist es bekannt, Antriebsstränge für Kraftfahrzeuge zu hybridisieren. Dies beinhaltet generell die Bereitstellung wenigstens einer elektrischen Maschine, die in der Regel als elektrischer Motor oder als elektrischer Generator arbeiten kann. In dem Betriebsmodus als elektrische Maschine kann zusätzliches Antriebsmoment bereitgestellt werden. In dem Betriebsmodus als elektrischer Generator kann die elektrische Maschine rekuperierend arbeiten, um beispielsweise bei einem Bremsvorgang elektrische Energie zum Laden eines Energiespeichers zu gewinnen.

Generell ist es in derartigen Antriebssträngen bekannt, eine elektrische Maschine zwischen dem Antriebsmotor und dem Doppelkupplungsgetriebe anzuordnen, also in Leistungsflussrichtung vor den Reibkupplungen des Doppelkupplungsgetriebes.

Bei dem eingangs genannten Hybridantriebsstrang ist die elektrische Maschine jedoch innerhalb des Doppelkupplungsgetriebes zumindest zeitweise mit einem Eingang von einem der Teilgetriebe verbunden, also in Leistungsflussrichtung hinter der zugeordneten Reibkupplung (vorliegend der zweiten Reibkupplung). Hierdurch liegt ein Summenpunkt von Antriebsmotor und elektrischer Maschine nicht vor dem Eingang des Doppelkupplungsgetriebes, sondern im Getriebe. Hierdurch können die Schaltabläufe eines konventionellen Doppelkupplungsgetriebes ergänzt werden.

Mit einem Antriebsstrang der beschriebenen Art ist ein konventioneller Betrieb möglich, bei dem nur der Antriebsmotor aktiv ist, die elektrische Maschine jedoch nicht an den Antriebsstrang angebunden ist oder mitgeschleppt wird. Ferner ist ein hybridischer Betriebsmodus möglich, bei dem Antriebsleistung sowohl von dem Antriebsmotor als auch von der elektrischen Maschine bereitgestellt wird. Schließlich ist auch ein rein elektrischer Antrieb möglich, bei dem der Verbrennungsmotor abgeschaltet ist (also in der Regel steht). Hierbei sind die Reibkupplungen des Doppelkupplungsgetriebes in der Regel geöffnet, damit der Antriebsmotor (in der Regel ein Verbrennungsmotor) nicht mitgeschleppt werden muss.

Im rein elektrischen Antriebsmodus können die herkömmlichen Schaltabläufe eines Doppelkupplungsgetriebes nicht angewendet werden, da sich die elektrische Maschine auf der Sekundärseite der zugeordneten Reibkupplung befindet.

Aus dem Dokument DE 10 2010 044 618 A1 sind Verfahren zum Ansteuern eines Hybrid-Antriebsstranges während eines rein elektrischen Fahrbetriebs bekannt. Eine elektrische Maschine ist hier in Leistungsflussrichtung hinter einer Kupplung eines Doppelkupplungsgetriebes angebunden, so dass ein elektrischer Fahrbetrieb über die Gangstufen des zugeordneten Teilgetriebes erfolgen kann. Bei Gangwechseln kann hierbei eine Zugkraftunterstützung auf folgende Art und Weise erreicht werden.

In einer ersten Variante wird der Verbrennungsmotor durch Schließen der einen oder der anderen Kupplung angeschleppt, ohne diesen zu zünden. Während des Gangwechsels (Hochschaltung) wird über die andere Kupplung ein Zugkraftunterstützungsmoment bereitgestellt, das die Schwungenergie des dann austrudelnden Verbrennungsmotors nutzt. Dabei kann in dem der anderen Kupplung zugeordneten Teilgetriebe auch ein Gangstufenwechsel erfolgen, um den Verbrennungsmotor mit einer geeigneten Gangstufe anzuschleppen und mit einer anderen Gangstufe das Zugkraftunterstützungsmoment bereit zu stellen.

In einer zweiten Variante kann über vergleichbare Schritte bei Rückschaltungen ein Schubkraftunterstützungsmoment bereitgestellt werden, wobei der Verbrennungsmotor dabei nicht hochgeschleppt wird, sondern im Stillstand als Schlepplast verwendet wird. Dabei ist das Schubkraftunterstützungsmoment so einzuregeln, dass der Verbrennungsmotor nicht in Drehung versetzt wird, also ein auf den Verbrennungsmotor ausgeübtes Drehmoment unterhalb eines sogenannten Losbrechmomentes bleibt.

Vor diesem Hintergrund ist es eine Aufgabe der Erfindung, beim Anschleppen des Antriebsmotors eine Überlastung der elektrischen Maschine zu verhindern.

In herkömmlichen Antriebssträngen mit Verbrennungsmotor ist es bekannt, zum Starten des Verbrennungsmotors einen elektrischen Anlassermotor bereitzustellen, der den Verbrennungsmotor auf eine Drehzahl hochschleppen kann, bei der der Verbrennungsmotor gezündet werden kann (Zünddrehzahl des Verbrennungsmotors).

In Hybrid-Antriebssträngen ist man generell bestrebt, diesen Anlassvorgang mittels der als Antriebsmaschine bereitgestellten elektrischen Maschine durchzuführen, um hierdurch den Bauraum und das Gewicht eines Anlassermotors einzusparen. Bei dem Hybridantriebsstrang, auf den sich die vorliegende Erfindung bezieht, ist dies beispielsweise möglich, indem die erste Reibkupplung geöffnet wird und das zweite Teilgetriebe auf neutral geschaltet wird, so dass Antriebsleistung von der elektrischen Maschine über die zweite Reibkupplung dem Verbrennungsmotor zugeführt werden kann, um diesen anzulassen.

Bei der vorliegenden Erfindung ist jedoch ein derartiger Anlassermotor, insbesondere in Form eines elektrischen Anlassermotors, zusätzlich zu der elektrischen Maschine vorgesehen, die als Antriebsmaschine dient.

Hierdurch kann der Antriebsmotor mit dem zugeordneten Anlassermotor in größeren Stückzahlen hergestellt werden, da keine Varianten mit und ohne Anlassermotor notwendig sind. Folglich kann eine Variante des Hybridantriebsstranges auch als rein verbrennungsmotorischer Antriebsstrang vorgesehen sein. Mit anderen Worten kann das Bereitstellen eines Hybridantriebsstranges eine Zusatzoption für einen herkömmlichen Antriebsstrang mit Verbrennungsmotor/Anlassermotor darstellen.

Der Grundgedanke des Bereitstellens eines Füllmomentes durch Anschleppen des Antriebsmotors (Verbrennungsmotors), ohne diesen zu zünden, um auf diese Weise Schwungenergie zum Bereitstellen eines Füllmomentes bereitzustellen, ist aus dem Dokument DE 10 2010 044 618 A1 dem Grunde nach bereits bekannt, wie oben beschrieben.

Das Anschleppen des Antriebsmotors bedingt jedoch hierbei komplexe Schaltvorgänge entweder in dem ersten Teilgetriebe und Ansteuerungen der ersten Reibkupplung und/oder das Bereitstellen eines geeigneten elektrischen Momentes durch die elektrische Maschine. Insbesondere dann, wenn diese bereits an ihrer Leistungsgrenze ist, kann die elektrische Maschine das Schleppmoment des Verbrennungsmotors während dessen Anschleppens möglicherweise nicht hinreichend kompensieren.

In diesem Fall ist es vorteilhaft, wenn hierzu der Anlassermotor verwendet wird anstelle der elektrischen Maschine.

Generell ist es möglich, den Anlassermotor dazu zu verwenden, um den Verbrennungsmotor vollständig auf die Drehzahl hochzuschleppen, die erforderlich ist, um die notwendige Schwungenergie aufzubauen, die später in Form eines Füllmomentes bereitgestellt werden soll. Anlassermotoren haben jedoch in der Regel einen begrenzten Drehzahlbereich, so dass hiermit nicht beliebige Drehzahlen erreicht werden können.

Beim Anschleppen eines Verbrennungsmotors ist zunächst ein sogenanntes Losbrechmoment zu überwinden, das größer ist als das anschließend aufzubringende Schleppmoment.

Durch Verwendung des Anlassermotors zur Überwindung des Losbrechmomentes kann die elektrische Maschine, die dieses Moment kompensieren soll, um Zugkraftunterbrechungen bzw. Ruckeln zu vermeiden, entlastet werden.

Die elektrische Maschine muss bei diesem Ansteuerungsvorgang folglich nur das Trägheitsmoment, die Verluste und ein Beschleunigungsmoment liefern, so dass mehr Moment an den Abtrieb geleitet werden kann.

Gemäß der Erfindung wird das Füllmoment aus der Schwungenergie des zuvor angeschleppten, nicht gezündeten Antriebsmotors bereitgestellt, wobei das Anschleppen über den ersten Leistungsübertragungspfad erfolgt, und wobei vor dem Anschleppen in dem ersten Teilgetriebe eine hohe Gangstufe eingelegt wird, insbesondere die höchste oder die zweithöchste Gangstufe des zweiten Teilgetriebes.

Durch das Einlegen einer hohen Gangstufe wird das von der elektrischen Maschine benötigte Moment, das zur Drehmomentkompensation aufgewendet werden sollte, reduziert.

Das Verfahren kombiniert die Verwendung des Anlassermotors. Ferner ist es auch möglich, im ersten Leistungsübertragungspfad einen Gangwechsel durchzuführen, bevor das Füllmoment zur Verfügung gestellt wird.

Erfindungsgemäß ist es, zunächst in einer hohen Gangstufe das Losbrechmoment zu überwinden, und anschließend im ersten Leistungsübertragungspfad auf eine niedrigere Gangstufe zu wechseln, um den Antriebsmotor auf eine höhere Drehzahl anschleppen zu können. Hierdurch kann die Schwungenergie erhöht werden, so dass mehr Zeit für den Gangwechsel im zweiten Leistungsübertragungspfad zur Verfügung steht, da über einen längeren Zeitraum Füllmoment aus der Schwungenergie bereitgestellt werden kann.

Generell können die obengenannten Verfahren dazu verwendet werden, um ein Füllmoment in Form eines Zugkraftunterstützungsmomentes bei einer Zughochschaltung bereitzustellen.

In gleicher Weise ist es mit den obigen Verfahren möglich, ein Füllmoment in Form eines Zugkraftunterstützungsmomentes bei einer Zugrückschaltung bereitzustellen.

Generell kann mit den erfindungsgemäßen Verfahren ein Gangwechsel im rein elektrischen Fahrbetrieb erfolgen, wobei zumindest die Qualität von gestützten Gangwechseln mit automatisierten Schaltgetrieben erreicht wird. Die Gesamtschaltzeit für einen solchen Gangwechsel ist vorzugsweise vergleichbar zu jener einer herkömmlichen Schaltung eines Doppelkupplungsgetriebes (mit Momentenübergabe von einem Leistungsübertragungspfad auf den anderen).

Insgesamt ergeben sich mit einem derartigen Hybridantriebsstrang bessere Beschleunigungswerte, ein erhöhter Komfort und eine erhöhte Dynamik. Durch das länger anstehende höhere Moment am Abtrieb werden subjektiv kürzere Schaltzeiten erreicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 : eine schematische Darstellung einer ersten Ausführungsform eines Hybridantriebsstranges zur Durchführung des erfindungsgemäßen Verfahrens;
Fig. 2 : ein Flussdiagramm einer Ausführungsform eines Gangwechsels im rein elektrischen Antriebsmodus mit Zugkraftunterstützung;
Fig. 3 : ein Zeitablaufdiagramm von Drehzahlen und Drehmomenten zur Erläuterung des Gangwechsels der Fig. 2 ;
Fig. 4 : ein Flussdiagramm einer weiteren nicht erfindungsgemäßen Ausführungsform eines Gangwechsels im rein elektrischen Antriebsmodus mit Zugkraftunterstützung;
Fig. 5 : ein Zeitablaufdiagramm von Drehzahlen und Drehmomenten zur Erläuterung des Gangwechsels der Fig. 4 ;
Fig. 6 : ein Flussdiagramm einer weiteren nicht erfindungsgemäßen Ausführungsform eines Gangwechsels im rein elektrischen Antriebsmodus mit Zugkraftunterstützung;
Fig. 7 : ein Zeitablaufdiagramm von Drehzahlen und Drehmomenten zur Erläuterung des Gangwechsels der Fig. 6 ;
Fig. 8 : ein Flussdiagramm einer weiteren nicht erfindungsgemäßen Ausführungsform eines Gangwechsels im rein elektrischen Antriebsmodus mit Zugkraftunterstützung; und
Fig. 9 : ein Zeitablaufdiagramm von Drehzahlen und Drehmomenten zur Erläuterung des Gangwechsels der Fig. 8 .

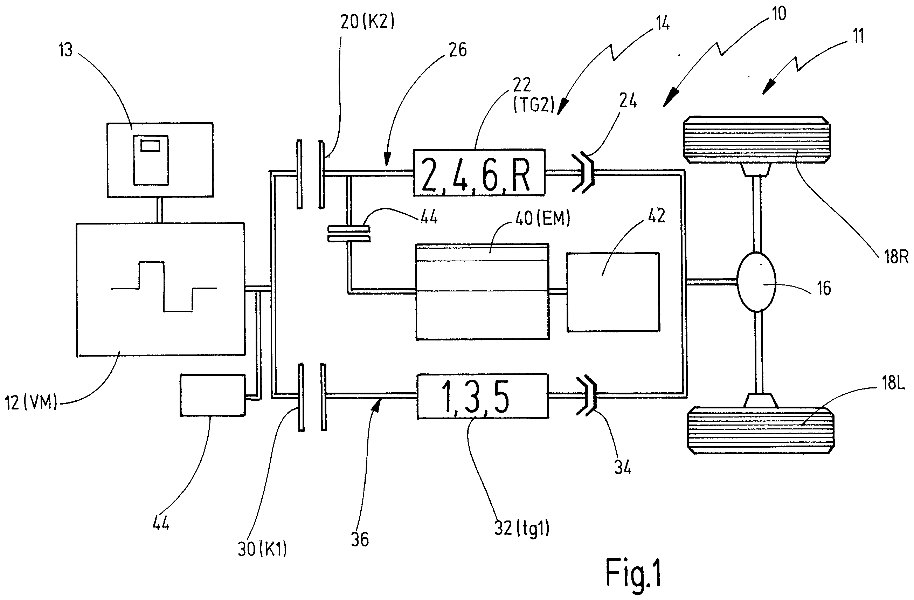

In Fig. 1 ist ein Antriebsstrang für ein Kraftfahrzeug 11 generell mit 10 bezeichnet. Das Kraftfahrzeug 11 kann beispielsweise ein Personenkraftwagen sein.

Der Antriebsstrang 10 beinhaltet einen Antriebsmotor 12, beispielsweise in Form eines Verbrennungsmotors, der aus einem Energiespeicher wie einem Kraftstofftank13 versorgt wird. Ferner beinhaltet der Antriebsstrang 10 ein Doppelkupplungsgetriebe (DKG) 14, dessen Abtriebsseite mit einem Differential 16 verbunden ist. Das Differential 16 verteilt Antriebsleistung auf ein linkes und ein rechtes angetriebenes Rad 18L, 18R.

Das Doppelkupplungsgetriebe 14 beinhaltet eine erste Reibkupplung 30 sowie ein erstes Teilgetriebe 32. Das erste Teilgetriebe 32 beinhaltet beispielsweise die ungeraden Gangstufen 1, 3, 5, etc., die mittels zugeordneter Schaltkupplungen 34 ein- und auslegbar sind. Die erste Reibkupplung 30 (K1) und das erste Teilgetriebe 32 (TG1) bilden einen ersten Leistungsübertragungspfad 36 zur Übertragung von Antriebsleistung von dem Antriebsmotor 12 zu dem Differential 16.

Das Doppelkupplungsgetriebe 14 beinhaltet ferner eine zweite Reibkupplung 20 (K2) sowie ein zweites Teilgetriebe 22 (TG2). Das zweite Teilgetriebe 22 beinhaltet beispielsweise Gangstufen 2, 4, 6, R, die mittels schematisch angedeuteter Schaltkupplungen 24 ein- und auslegbar sind. Die zweite Reibkupplung 20 und das zweite Teilgetriebe 22 bilden einen zweiten Leistungsübertragungspfad 26 zur Übertragung von Leistung von dem Antriebsmotor 12 zu dem Differential 16.

Ferner beinhaltet der Antriebsstrang 10 eine elektrische Maschine (EM) 40, die mit einer Anordnung 42 zur Ansteuerung und Energieversorgung verbunden ist. Die Anordnung 42 kann beispielsweise eine Leistungselektronik sowie eine Batterie beinhalten.

Die elektrische Maschine 40 ist an einen Eingang des zweiten Teilgetriebes 22 fest angebunden, beispielsweise mittels eines Stirnradsatzes oder dergleichen. Alternativ hierzu kann die elektrische Maschine 40 mittels einer Koppelanordnung 46 (beispielsweise in Form einer Schaltkupplung) an den Eingang des zweiten Teilgetriebes 22 angebunden sein.

In einer alternativen, nicht dargestellten Variante kann die elektrische Maschine 14 auch alternativ an den Eingang des ersten Teilgetriebes 32 angebunden werden, wozu eine geeignete Koppeleinrichtung vorgesehen werden kann.

Die Anbindung der elektrischen Maschine 40 an jenes Teilgetriebe, das die höchste Gangstufe und die Rückwärtsgangstufe aufweist, ermöglicht ein elektrisches Fahren in nahezu allen Betriebssituationen, wie nachstehend noch ergänzend erläutert werden wird.

Der Antriebsstrang 10 ist dazu ausgelegt, in drei unterschiedlichen Betriebsarten zu arbeiten. In einem konventionellen Antriebsmodus wird Antriebsleistung nur von dem Antriebsmotor 12 (Verbrennungsmotor, VM) erzeugt. Gangwechsel erfolgen auf zugkraftunterbrechungsfreie Art und Weise, indem Antriebsleistung über einen der Leistungsübertragungspfade 26, 36 geführt wird, wobei in dem Teilgetriebe des anderen Leistungsübertragungspfades eine Gangstufe vorgewählt wird. Anschließend erfolgt ein Gangwechsel durch Übergabe des Leistungsübertragungsflusses von dem einen Pfad auf den anderen Pfad, indem die Reibkupplungen 20, 30 auf überschneidende Art und Weise betätigt werden. Dieser Antriebsmodus ist auf dem Gebiet der Doppelkupplungsgetriebe allgemein bekannt.

Ferner ist ein zweiter hybridischer Antriebsmodus einrichtbar, bei dem Antriebsleistung sowohl von dem Antriebsmotor 12 als auch von der elektrischen Maschine 40 bereitgestellt wird. Hierbei können die Antriebsleistungen im Wesentlichen über den Summenpunkt am Eingang des zweiten Teilgetriebes 22 (bzw. in Leistungsflussrichtung hinter der zweiten Reibkupplung 22) aufaddiert werden. Eine weitere Möglichkeit eines hybridischen Antriebsmodus besteht darin, dass Antriebsleistung von der elektrischen Maschine über das eine Teilgetriebe und Antriebsleistung von dem Verbrennungsmotor über das andere Teilgetriebe übertragen werden, wobei ein Summenpunkt dann am Differential liegt. Im zweiten hybridischen Antriebsmodus kann die elektrische Maschine sowohl ein positives als auch ein negatives Drehmoment stellen (Boost-Betrieb bzw. Lastpunktanhebung/Laden).

Schließlich ist ein dritter Antriebsmodus möglich, bei dem nur die elektrische Maschine 40 zur Erzeugung von Antriebsleistung angesteuert wird, wohingegen der Antriebsmotor 12 stillgelegt wird. Da die elektrische Maschine 40 auf der Sekundärseite der zweiten Reibkupplung 20 angebunden ist, können in diesem Betriebsmodus die herkömmlichen Schaltabläufe eines Doppelkupplungsgetriebes nicht angewendet werden.

Generell ist es jedoch wünschenswert, im rein elektrischen Vorwärtsfahrbetrieb Gangwechsel von der Vorwärtsgangstufe 2 in die Vorwärtsgangstufe 4, gegebenenfalls in die Vorwärtsgangstufe 6, durchzuführen, und umgekehrt.

Im rein elektrischen Fahrbetrieb wird Antriebsleistung von der elektrischen Maschine über das zweite Teilgetriebe 22 dem Differential 16 zugeführt. Die zweite Reibkupplung 20 ist generell geöffnet. Um beispielsweise eine Zughochschaltung durchzuführen, muss das von der elektrischen Maschine 40 bereitgestellte Moment zum Auslegen eines Startganges reduziert werden. Auch während des Einlegens der Zielgangstufe wird von der elektrischen Maschine 40 dabei kein Moment bereitgestellt, da ansonsten gegebenenfalls keine Synchronisierung an der Schaltkupplung 24 erfolgen kann.

Demzufolge können bei herkömmlichen Hybridantriebssträngen dieser Art Gangwechsel im rein elektrischen Fahrbetrieb nur mit Zugkraftunterbrechung durchgeführt werden.

Um dieses Problem zu lindern, werden nachfolgende Verfahren erläutert.

Sämtliche nachstehend beschriebenen Verfahren gehen davon aus, dass das Fahrzeug im rein elektrischen Betrieb fährt und dass eine automatisierte Schaltung mittels des Antriebsstranges der Fig. 1 durchgeführt werden soll, wobei es sich bei der Schaltung entweder um eine Zughochschaltung oder um eine Zugrückschaltung handelt. Die nachstehenden Diagramme beziehen sich sämtlich auf Zughochschaltungen. Für Zugrückschaltungen gelten diese Darstellungen jedoch in entsprechender Weise.

Insbesondere gehen die nachstehenden Verfahren davon aus, dass eine Zughochschaltung von der Gangstufe 2 in die Gangstufe 4 stattfindet, wobei diese beiden Gangstufen im zweiten Teilgetriebe 22 (TG2) liegen.

In den nachfolgenden Zeitdiagrammen ist bei n_VM die Drehzahl des Verbrennungsmotors gezeigt, bei n_EM die Drehzahl der elektrischen Maschine, bei n_TG1 die Drehzahl am Eingang des ersten Teilgetriebes 32, bei n_TG2 die Drehzahl am Eingang des zweiten Teilgetriebes. Dabei sind die Drehzahlen n_EM und n_TG2 identisch oder proportional, da die elektrische Maschine 40 in diesem Fall fest an den Eingang des zweiten Teilgetriebes 22 (TG2) bzw. an den Ausgang der zweiten Reibkupplung 20 (K2) angekoppelt ist.

Ferner sind in den nachstehenden Zeitdiagrammen die jeweiligen Drehmomente wie folgt gezeigt: tq_VM ist das Drehmoment des Verbrennungsmotors, tq_EM ist das Drehmoment der elektrischen Maschine, tq_K1 ist das Drehmoment, das von der ersten Reibkupplung 30 (K1) übertragen wird, tq_K2 ist das Drehmoment, das von der zweiten Reibkupplung 20 (K2) übertragen wird.

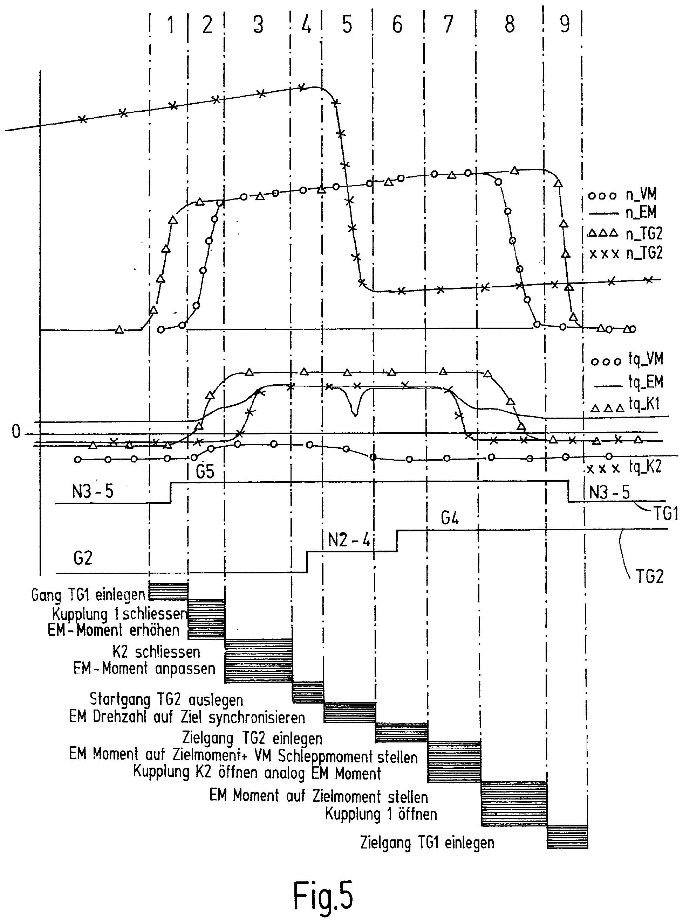

Ferner sind in den Zeitdiagrammen die Gangwechsel gezeigt, wobei diese in den jeweiligen Teilgetrieben TG1, TG2 gezeigt sind, wobei G für Gangstufe steht und wobei N für Neutralstellung steht. Ferner sind die nachstehend beschriebenen Zeitdiagramme hinsichtlich Drehzahl und hinsichtlich Drehmoment teilweise normiert, so dass die unterschiedlichen Übersetzungen herausgerechnet sind, um die Abläufe verständlicher zu machen. Dies gilt insbesondere für das Zeitablaufdiagramm der Fig. 5.

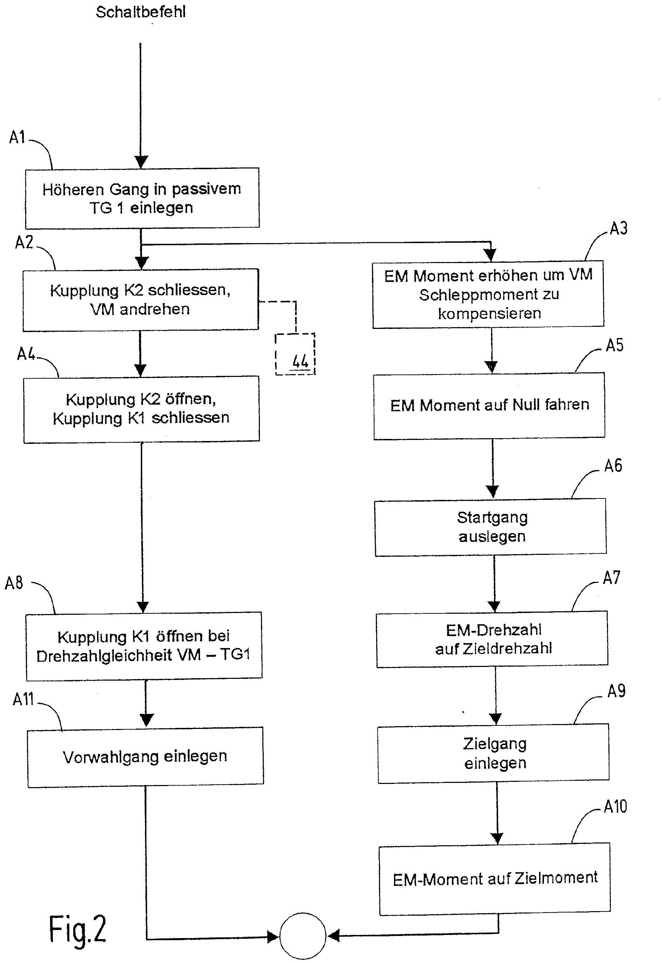

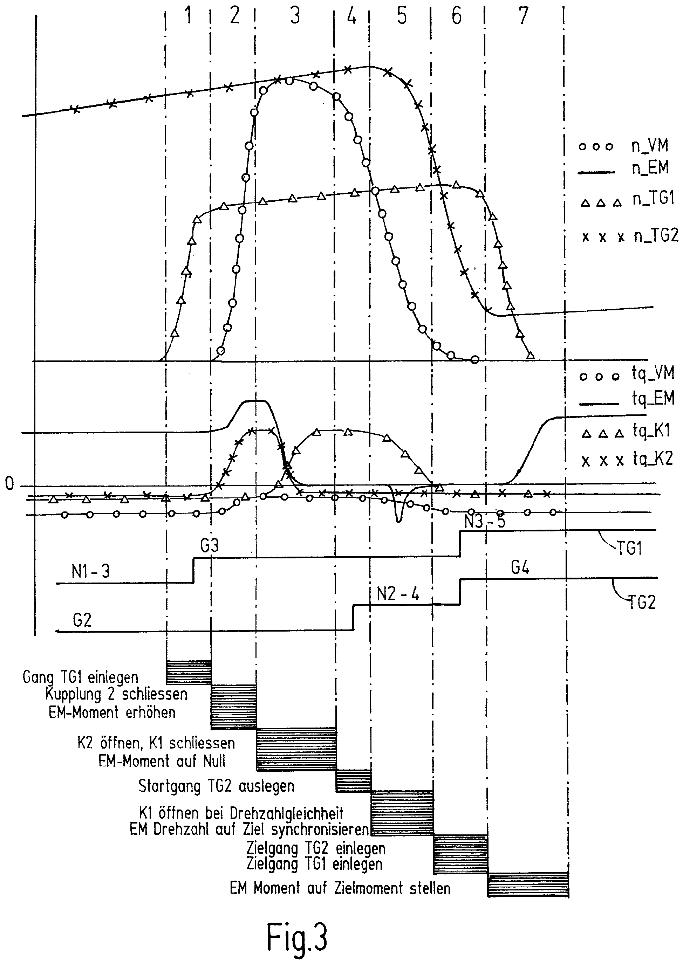

Eine erste Ausführungsform eines erfindungsgemäßen Verfahrens ist in den Fig. 2 und 3 gezeigt. Fig. 2 zeigt dabei ein Fluss- bzw. Ablaufdiagramm, und Fig. 3 zeigt ein Diagramm von Drehzahlen und Drehmomenten sowie Schaltvorgängen in dem Antriebsstrang über der Zeit.

Bei diesem Verfahren gemäß Fig. 2 und 3 wird in einem ersten Schritt (Phase 1 in Fig. 3 und Schritt A1 in Fig. 2) zunächst in dem ersten Teilgetriebe 1 (passives Teilgetriebe) aus der Neutralstellung eine möglichst hohe Gangstufe eingelegt (Gangstufe 3 oder 5).

In der nachfolgenden Phase 2 der Fig. 3 wird die Kupplung K2 geschlossen, so dass der Verbrennungsmotor angeschleppt wird, ohne diesen zu zünden (A2). Parallel hierzu wird in dem Schritt A3 das Moment der elektrischen Maschine erhöht, um das Schleppmoment des Verbrennungsmotors zu kompensieren.

In Fig. 2 ist gezeigt, dass beim Schritt A2 das Andrehen bzw. Anschleppen des Verbrennungsmotors mittels der Kupplung K2 erfolgen kann. Der Antriebsstrang weist einen Anlassermotor 44 auf, so dass dieses Andrehen mittels des Anlassermotors 44 erfolgt.

In der Phase 3 der Fig. 3 hat die Drehzahl des Verbrennungsmotors die Zieldrehzahl erreicht, so dass anschließend die Kupplung K2 geöffnet werden kann (A4 in Fig. 2), und das Moment der elektrischen Maschine heruntergefahren werden kann. Der Anlassermotor 44 wird zum Anschleppen des Verbrennungsmotors verwendet, wobei die Kupplung K2 nicht notwendigerweise geschlossen wurde und folglich auch nicht notwendigerweise wieder geöffnet werden muss.

Durch das Schließen der Kupplung K1 in Phase 3 bis einschließlich Phase 5 der Fig. 3 wird über den ersten Leistungsübertragungspfad 36 ein Füllmoment mittels der Schwungenergie des austrudelnden Verbrennungsmotors bereitgestellt.

In dem ersten Leistungsübertragungspfad 36 ist bei geöffneter Kupplung K2 nun im Schritt A6 der Startgang des Gangwechsels auszulegen (Phase 4 in Fig. 3). Anschließend ist die Drehzahl der elektrischen Maschine 40 anzupassen (Phase 5 in Fig. 3). Bei Drehzahlgleichheit (Phase 6 in Fig. 3 und Schritt A8 in Fig. 2) kann der Zielgang des Gangwechsels eingelegt werden (in Phase 6 von Fig. 3 und Schritt A9, Zielgang ist Gangstufe 4).

Anschließend kann, wie bei einem herkömmlichen Gangwechsel, das Moment der elektrischen Maschine 40 wiederum auf ein Zielmoment erhöht werden (Phase 7 in Fig. 3 und Schritt A10). Zudem kann in den Phasen 6 oder 7 in dem ersten Teilgetriebe TG1 bei Bedarf bereits ein Vorwahlgang eingelegt werden.

Das Verfahren der Fig. 2 basiert folglich darauf, ein Füllmoment bereitzustellen, indem der Verbrennungsmotor nicht gezündet wird, jedoch zunächst angeschleppt wird, damit dessen Schwungenergie zur Bereitstellung eines Füllmomentes genutzt werden kann. Dabei wird im Gegensatz zu den Verfahren des Dokumentes DE 10 2010 044 618 A1 eine relativ hohe Gangstufe eingelegt (vorliegend die Gangstufe 3 oder 5 und nicht die Gangstufe 1), bei der es sich um die zweithöchste oder höchste Gangstufe handelt. Hierdurch kann das von der elektrischen Maschine 40 zur Kompensation des Schleppmomentes bereitzustellende Moment geringer sein, so dass mehr Drehmoment in den Phasen 1 und 2 sowie teilweise 3 für den Antrieb des Kraftfahrzeuges bereitgestellt werden kann.

In der alternativen Variante, bei der der Anlassermotor 44 zum Anschleppen des Verbrennungsmotors verwendet wird, wenigstens jedoch zum Überwinden eines Losbrechmomentes, kann während dieser Phasen generell ein höheres Drehmoment durch die elektrische Maschine für den Antrieb des Kraftfahrzeuges bereitgestellt werden.

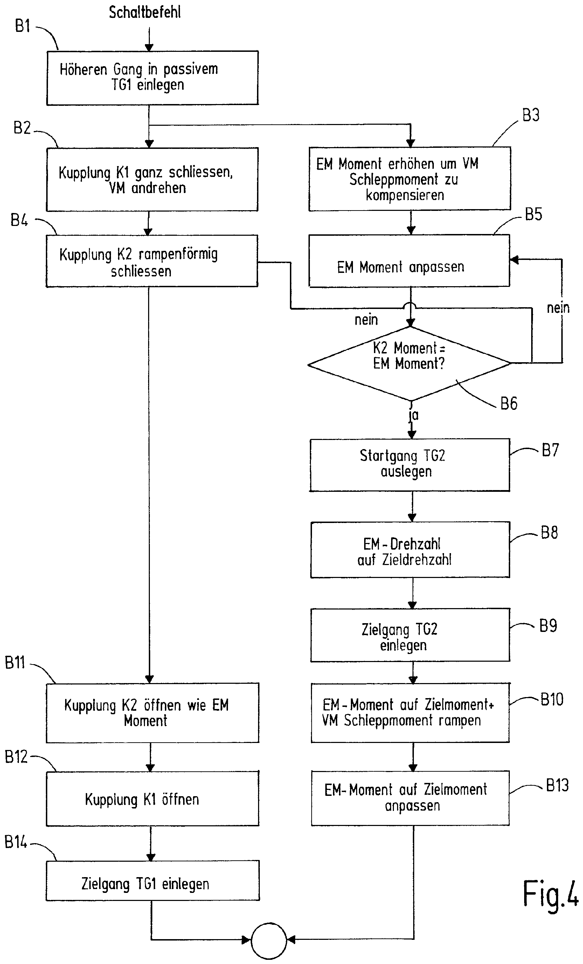

Eine weitere Ausführungsform eines nicht erfindungsgemäßen Verfahrens ist in den Fig. 4 und 5 dargestellt.

Bei diesem Verfahren wird ein Füllmoment von der elektrischen Maschine 40 bereitgestellt, wobei dieses Füllmoment über die zweite Reibkupplung 20 und die erste Reibkupplung 30 auf den ersten Leistungsübertragungspfad 36 geführt wird. Hierbei wird der Antriebsmotor 12 zwangsweise mitgeschleppt, so dass dieses Mitschleppmoment ebenfalls mit kompensiert werden muss. Alternativ hierzu ist es denkbar, zwischen den Reibkupplungen 20, 30 eine dritte Reibkupplung vorzusehen, die den Antriebsmotor 12 von dem Doppelkupplungsgetriebe 14 abkoppelt. In diesem Fall muss ein solches Mitschleppmoment nicht überwunden werden, da diese Kupplung in diesem Fall geöffnet werden kann.

Das Verfahren startet zunächst mit dem Einlegen einer höheren Gangstufe (z.B. Gangstufe 5) in dem Teilgetriebe 1 (Schritt B1 in Fig. 4, Phase 1 in Fig. 5).

In den nachfolgenden Schritten B2, B3 (Phase 2 in Fig. 5) wird die Kupplung K1 vollständig geschlossen, so dass der Antriebsmotor 12 angeschleppt wird. Dies kann erfolgt mittels eines Anlassermotors 44.

Zur Kompensation des Schleppmomentes wird in dieser Phase das Drehmoment der elektrischen Maschine erhöht.

In der anschließenden Phase 3 der Fig. 5 (Schritte B4, B5 in Fig. 4) wird die zweite Reibkupplung 20 (K2) rampenförmig geschlossen, so dass die elektrische Maschine 40 Drehmoment über die zweite Reibkupplung 20 und die erste Reibkupplung 30 in den ersten Leistungsübertragungspfad 36 überführt. Hierbei ist folglich das Moment der elektrischen Maschine 40 anzupassen.

Sobald das Moment über der zweiten Reibkupplung 20 gleich dem von der elektrischen Maschine 40 bereitgestellten Moment ist (in Phase 3 der Fig. 5), wird der zweite Leistungsübertragungspfad 26 folglich lastfrei.

Demzufolge kann in den Schritten B7 bis B9 der Fig. 4 (Phasen 4 bis 6 in Fig. 5) der Gangwechsel von dem Startgang (G2) in den Zielgang (G4) des Teilgetriebes 2 erfolgen.

In den nachfolgenden Schritten B11, B10 (Phase 7 in Fig. 5) wird die zweite Reibkupplung 20 wieder geöffnet, und zwar in Entsprechung zu dem von der elektrischen Maschine bereitgestellten Moment, das auf ein Zielmoment unter Berücksichtigung des Schleppmomentes des Antriebsmotors 12 geführt wird.

In der Phase 8 kann dann die erste Reibkupplung 30 geöffnet werden (Schritt B12 in Fig. 4), und parallel hierzu das Moment der elektrischen Maschine 40 auf ein Zielmoment geführt werden (Schritt B13).

Anschließend kann im Schritt B14 eine Zielgangstufe im ersten Teilgetriebe eingelegt werden, oder aber auch ein Wechsel in eine Neutralstellung erfolgen, wie in der Phase 9 der Fig. 5 gezeigt.

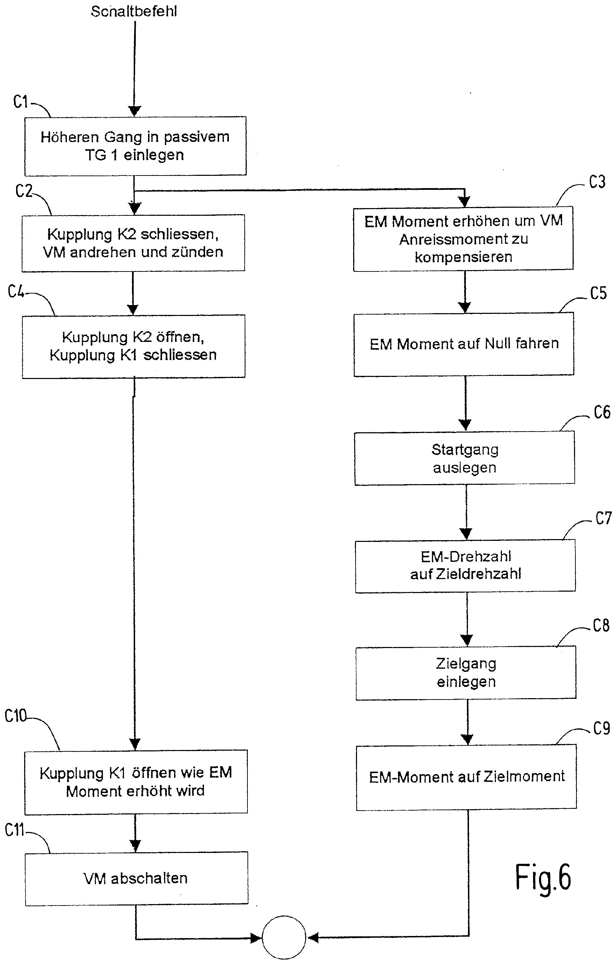

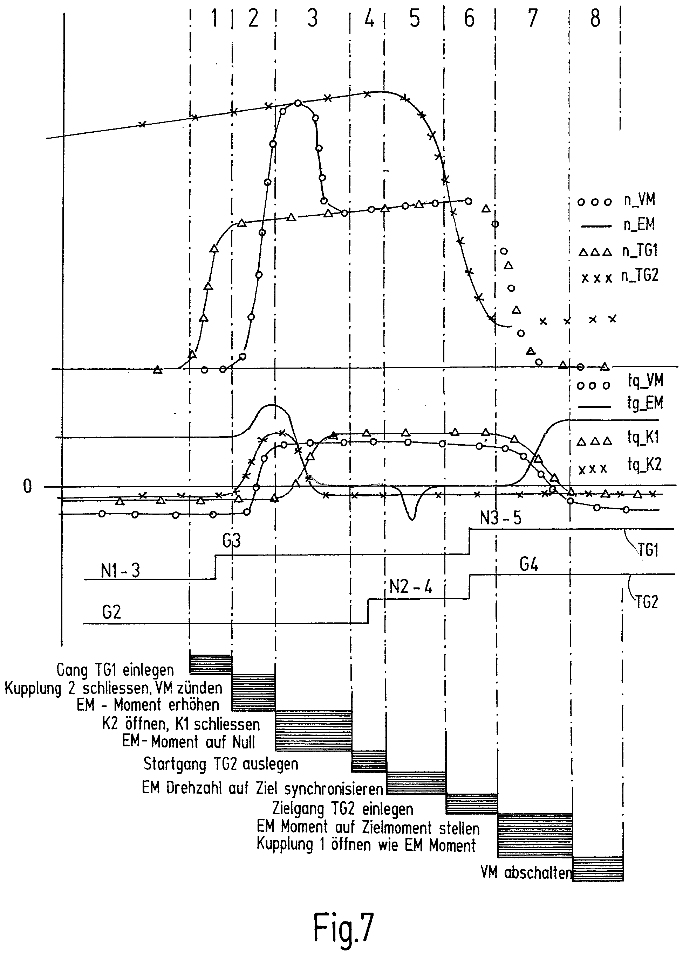

In den Fig. 6 und 7 ist eine weitere Ausführungsform eines nicht erfindungsgemäßen Verfahrens gezeigt, bei dem der Antriebsmotor als Verbrennungsmotor ausgebildet ist und dieser nicht nur angeschleppt wird, sondern auch gezündet wird, um ein Füllmoment mittels des gezündeten Verbrennungsmotors bereitzustellen.

Zunächst wird im Schritt C1 in dem ersten Teilgetriebe 32 eine höhere Gangstufe eingelegt (G3 in Phase 1 der Fig. 7).

Anschließend wird die zweite Reibkupplung K2 geschlossen, so dass der Verbrennungsmotor hochgeschleppt wird (Phase 2 in Fig. 7 und Schritt C2 in Fig. 6). Während dieses Anschleppens wird das Moment der elektrischen Maschine 40 erhöht, um das Schleppmoment bzw. Anreißmoment des Verbrennungsmotors zu kompensieren (Schritt C3).

Sobald der Verbrennungsmotor gezündet ist (in Phase 3), wird die zweite Reibkupplung 20 geöffnet und die erste Reibkupplung 30 geschlossen. Über den ersten Leistungsübertragungspfad 36 wird nun Füllmoment mittels des Verbrennungsmotors bereitgestellt. In dem zweiten Leistungsübertragungspfad 26 kann das Moment der elektrischen Maschine 40 heruntergefahren werden (Schritt C5), und der Gangwechsel kann in an sich üblicher Weise erfolgen (Schritte C6 bis C8, Phasen 4 bis 6 der

Fig. 7).

Anschließend wird im Schritt C10 die erste Reibkupplung wieder geöffnet und parallel hierzu das Moment der elektrischen Maschine 40 erhöht (C9, Phase 7 in Fig. 7).

Im Schritt C11 kann der Verbrennungsmotor dann wieder abgeschaltet werden.

Die Dauer, für die der Verbrennungsmotor gezündet wird, ist dabei auf den Zeitbereich des Gangwechsels beschränkt und kann insbesondere kürzer sein als eine Sekunde, insbesondere kürzer als eine halbe Sekunde.

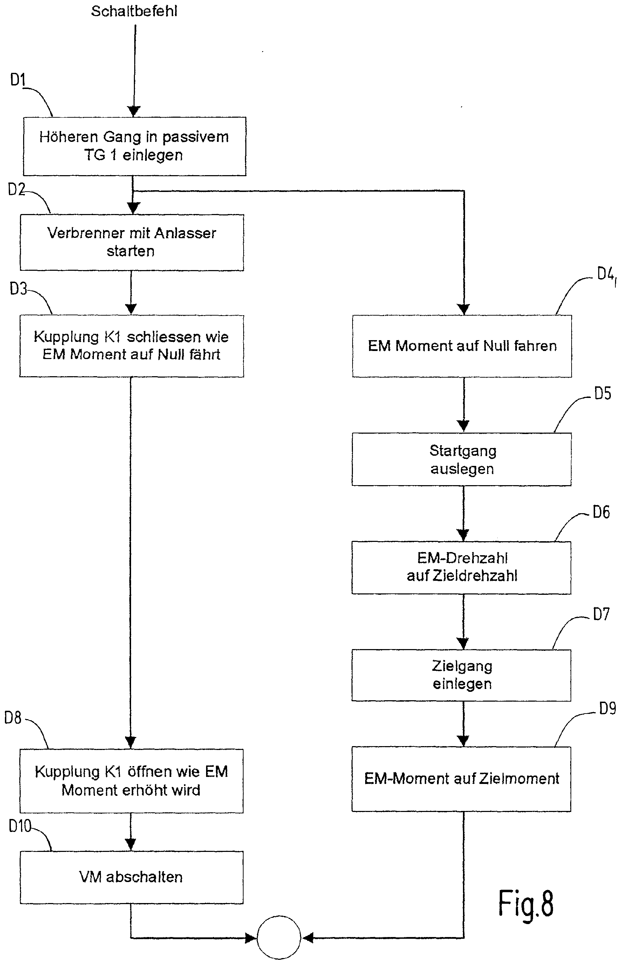

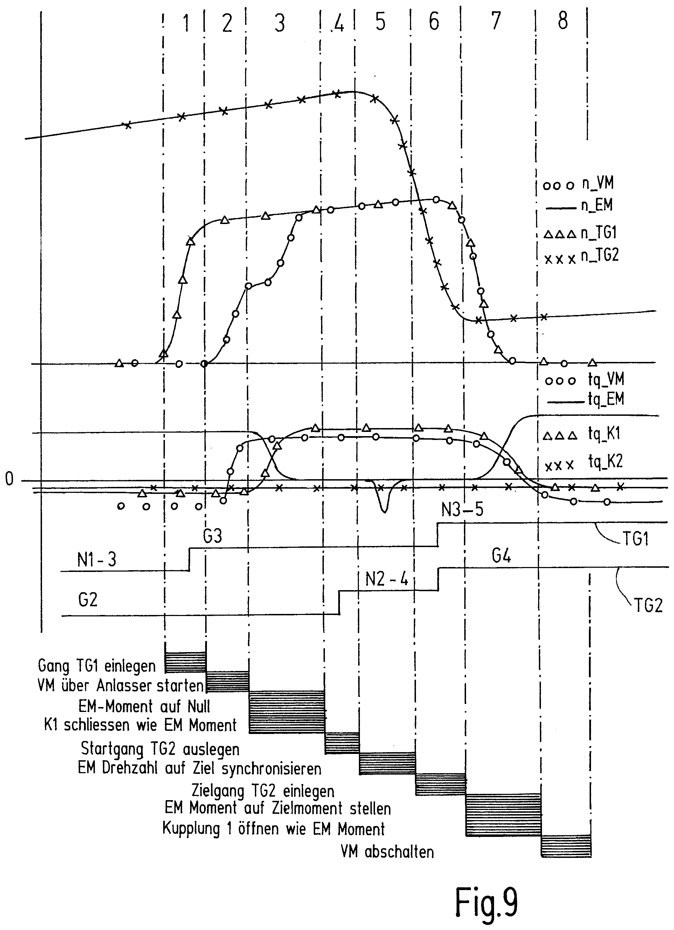

In den Fig. 8 und 9 ist eine weitere Ausführungsform eines nicht erfindungsgemäßen Verfahrens gezeigt, die im Wesentlichen dem Verfahren der Fig. 6 und 7 entspricht.

Dabei wird der Verbrennungsmotor jedoch nicht durch Schließen der zweiten Reibkupplung hochgedreht, bis er die Zünddrehzahl erreicht hat. Vielmehr wird im Schritt D2 der Verbrenner mittels eines Anlassermotors gestartet, der bei dieser Variante in dem Antriebsstrang vorhanden ist.

Nach dem Starten kann die Kupplung K1 geschlossen werden (Schritt D3 entsprechend dem Schritt C4 der Fig. 6). Die Schritte D4 bis D7 entsprechen den Schritten C5 bis C8 der Fig. 6.

Die Schritte D9 bis D10 entsprechen den Schritten C9 bis C11 der Fig. 6.

## Patentansprüche

1. Verfahren zum Ansteuern eines Hybridantriebsstranges (10), der einen Antriebsmotor (12) und ein Doppelkupplungsgetriebe (14) aufweist, das zur Einrichtung von zwei Leistungsübertragungspfaden (26, 36) eine erste und eine zweite Reibkupplung (20, 30) und ein erstes und ein zweites Teilgetriebe (22, 32) aufweist, wobei eine elektrische Maschine (40) in Leistungsflussrichtung hinter der zweiten Reibkupplung (20) an den zweiten Leistungsübertragungspfad (26) angebunden ist, wobei ein rein elektrischer Fahrbetrieb über das der zweiten Reibkupplung (20) zugeordnete zweite Teilgetriebe (22) erfolgen kann, und wobei bei einem Gangwechsel in dem zweiten Teilgetriebe (22) während eines rein elektrischen Fahrbetriebes ein Füllmoment bereitgestellt wird,
wobei das Füllmoment aus der Schwungenergie des zuvor angeschleppten, nicht gezündeten Antriebsmotors (12) bereitgestellt wird, wobei
der Antriebsmotor (12) über den ersten Leistungsübertragungspfad (36) auf eine Zieldrehzahl angeschleppt wird,
**dadurch gekennzeichnet, dass**
der Antriebsstrang (10) ferner einen elektrischen Anlassermotor (44) aufweist und wobei der Anlassermotor (44) wenigstens dazu verwendet wird, um ein Losbrechmoment beim Anschleppen des Antriebsmotors (12) zu überwinden und wobei vor dem Anschleppen in dem ersten Teilgetriebe (32) eine hohe Gangstufe eingelegt wird, insbesondere die höchste oder die zweithöchste Gangstufe des ersten Teilgetriebes (32).

2. Verfahren nach Anspruch 1, **dadurch gekennzeichnet, dass** das Füllmoment ein Zugkraftunterstützungsmoment bei einer Zughochschaltung ist.

3. Verfahren nach Anspruch 1, **dadurch gekennzeichnet, dass** das Füllmoment ein Zugkraftunterstützungsmoment bei einer Zugrückschaltung ist.

## Claims

1. Method for controlling a hybrid power train (10), which has a drive engine (12) and a dual-clutch transmission (14) which, to establish two power transmission paths (26, 36), has a first and a second friction clutch (20, 30) and a first and a second component transmission (22, 32), wherein an electric machine (40) is connected to the second power transmission path (26) downstream of the second friction clutch (20) in a power flow direction, wherein a purely electric driving operation can be realized by means of the second component transmission (22) assigned to the second friction clutch (20), and wherein, in the event of a gear change in the second component transmission (22) during purely electric driving operation, a fill-in torque is provided,
wherein the fill-in torque is provided from the inertial energy of the previously cranked, non-fired drive engine (12), wherein
the drive engine (12) is cranked up to a target rotational speed by means of the first power transmission path (36),
**characterized in that**
the power train (10) also has an electric starter motor (44) and wherein the starter motor (44) is used at least to overcome a breakaway torque during the cranking of the drive engine (12) and wherein, before the cranking process, a high gear stage is engaged in the first component transmission (32), in particular the highest or the second-highest gear stage of the first component transmission (32).

2. Method according to Claim 1, **characterized in that** the fill-in torque is a traction force assistance torque during a traction upshift.

3. Method according to Claim 1, **characterized in that** the fill-in torque is a traction force assistance torque during a traction downshift.

## Revendications

1. Procédé de commande d'une chaîne cinématique hybride (10) qui comporte un moteur d'entraînement (12) et une transmission à double embrayage (14), laquelle comporte un premier et un deuxième embrayage à friction (20, 30) et une première et une deuxième sous-transmission (22, 32) pour régler deux chemins de transmission de puissance (26, 36), une machine électrique (40) étant raccordée au deuxième chemin de transmission de puissance (26) en aval du deuxième embrayage à friction (20) dans le sens de flux de puissance, un mode de roulement purement électrique pouvant être mis en œuvre par le biais de la deuxième sous-transmission (22) associée au deuxième embrayage à friction (20) et un couple de remplissage étant fourni lors d'un changement de vitesse dans la deuxième sous-transmission (22) pendant un mode d'entraînement purement électrique,
le couple de remplissage étant fourni à partir de l'énergie cinétique du moteur d'entraînement (12) non allumé auparavant remorqué et,
le moteur d'entraînement (12) étant remorqué à une vitesse cible par le biais du premier chemin de transmission de puissance (36),
**caractérisé en ce que**
la chaîne cinématique (10) comporte en outre un démarreur électrique (44) et le démarreur (44) étant utilisé au moins pour surmonter un couple de démarrage lors du remorquage du moteur d'entraînement (12) et un rapport supérieur étant engagé avant le remorquage dans la première sous-transmission (32), en particulier le rapport le plus élevé ou le deuxième rapport le plus élevé de la première sous-transmission (32).

2. Procédé selon la revendication 1, **caractérisé en ce que** le couple de remplissage est un couple d'appui de force de traction lors d'une montée en régime en traction.

3. Procédé selon la revendication 1, **caractérisé en ce que** le couple de remplissage est un couple d'appui de force de traction lors d'une rétrogradation en traction.
